(19) **Europäisches Patentamt / European Patent Office / Office européen des brevets**

(11) **EP 3 054 688 B1**

(12) **EUROPEAN PATENT SPECIFICATION**

(45) Date of publication and mention
of the grant of the patent:
**25.10.2017 Bulletin 2017/43**

(51) Int Cl.:
*H04N 19/573* (2014.01)    *H04N 19/61* (2014.01)

(21) Application number: **16160497.0**

(22) Date of filing: **03.03.2004**

(54) **CODING METHOD FOR MOVING PICTURE**

KODIERVERFAHREN FÜR BEWEGTBILDER

PROCÉDÉ DE CODAGE DESTINÉ À UNE IMAGE MOBILE

(84) Designated Contracting States:
**AT BE BG CH CY CZ DE DK EE ES FI FR GB GR HU IE IT LI LU MC NL PL PT RO SE SI SK TR**

(30) Priority: **03.03.2003 KR 20030013198**

(43) Date of publication of application:
**10.08.2016 Bulletin 2016/32**

(62) Document number(s) of the earlier application(s) in accordance with Art. 76 EPC:
**04716800.0 / 1 582 069**

(73) Proprietor: **LG Electronics, Inc.**
**Seoul 150-875 (KR)**

(72) Inventors:
• **Soh, Yoon-Seong**
  **137-724 Seoul (KR)**
• **Jeon, Byeong-Moon**
  **143-755 Seoul (KR)**

(74) Representative: **Diehl & Partner GbR**
**Patentanwälte**
**Erika-Mann-Strasse 9**
**80636 München (DE)**

(56) References cited:
• CHAD FOGG PIXONICS ET AL: "Adaptive Field/Frame Block Coding Experiment Proposal", ITU-T, SG 16 Q6, VIDEO CODING EXPERTS GROUP VCEG, no. VCEG-N76, 24 September 2001 (2001-09-24), - 27 September 2001 (2001-09-27), pages 1-7, XP030003323, Santa Barbara, CA,USA
• NILSSON: "Reference picture buffering text changes", JOINT VIDEO TEAM (JVT) OF ISO/IEC MPEG & ITU-T VCEG(ISO/IEC JTC1/SC29/WG11 AND ITU-T SG16 Q6), no. JVT-E149r5, 18 October 2002 (2002-10-18), pages I-XX,1-207, XP030005566, Geneva, Switzerland
• WANG: "MB adaptive field/frame coding for interlace sequences", JOINT VIDEO TEAM JVT OF ISO/IEC MPEG AND ITU-T VCEG, no. JVT-D108, 26 July 2002 (2002-07-26), XP030005380, Klagenfurt, Austria
• JVT: "Study of Final Committee Draft of Joint Video Specification", JOINT VIDEO TEAM (JVT) OF ISO/IEC MPEG & ITU-T VCEG(ISO/IEC JTC1/SC29/WG11 AND ITU-T SG16 Q6), no. JVT-F100, 16 February 2003 (2003-02-16), pages I-XV,1-226, XP030005665, Awaji, JP
• WANG L ET AL: "Interlace Coding Tools for H.26L Video Coding", ITU STUDY GROUP 16 - VIDEO CODING EXPERTS GROUP, no. VCEG-O37, 4 December 2001 (2001-12-04) , pages 1-20, XP002240263, Pattaya, Thailand
• BORGWARDT P: "Core Experiment on Interlaced Video Coding", ITU TELECOMMUNICATIONS STANDARDIZATION SECTOR ,VCEG-O59,, 4 December 2001 (2001-12-04), XP002275586,

**Description**

**Technical Field**

The present invention relates to a method for coding a moving picture, and more particularly, to a method for coding interlaced moving picture into frame picture having frame/field macroblock in a moving picture coding system that uses multiple reference pictures.

**Background Art**

Moving picture coding system compensates for motion using motion vector information. In case of moving picture coding system that uses multiple reference picture, reference picture index information as well as motion vector information is required for motion compensation. The reference picture index is a value that is used to distinguish multiple reference pictures from each other. A coder transfers the reference picture index to a decoder, and the decoder performs motion compensation from reference picture that is indicated by the reference picture index.

Generally, scanning methods are classified into a progressive scanning and an interlaced scanning. In case of the progressive scanning, an image of one frame consists of data that are sampled at the same time. In case of the interlaced scanning, an image of one frame consists of data that are sampled at different times, and the samples are alternated line by line.

The interlaced image of a frame is divided into a top field and a bottom field. In the interlaced scanning, one frame is divided into two field images. In this specification, an image is treated based on unit of picture. A frame or a field may be allocated to the picture.

Three coding methods for an interlaced moving picture are proposed. A first coding method is a field picture coding method which performs a coding process, considering each field as an independent picture at a picture or slice level. A second coding method is the frame picture coding method which performs a coding process after combining two fields into one frame at a picture or slice level. A third coding method is a frame picture coding method with frame/field macroblock, which performs a coding process by combining two fields into one frame and selecting a frame mode or a field mode at a macroblock level.

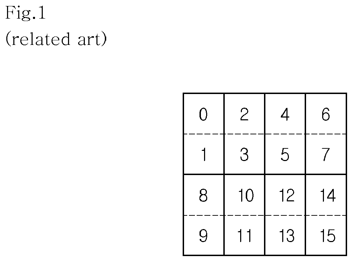

In the third coding method, two vertically adjacent macroblocks are bound into a pair and the coding is performed in unit of macroblock pair. In FIG. 1, numbers assigned in the macroblock pairs indicate macroblock addresses that are used to distinguish the macroblocks from each other.

Here, frame macroblock is a macroblock which is coded at upper and lower macroblocks of the macroblock pair in unit of frame. In other words, each macroblock is coded in unit of frame after two fields are combined into one frame.

Meanwhile, field macroblock is a macroblock that is coded at upper and lower macroblocks of macroblock pair in unit of field. The macroblock pair is divided into top and bottom field components and each field is coded independently. At this time, the macroblock pairs are rearranged so that the upper and lower macroblocks may respectively contain only top field component and only bottom field component. The upper macroblock is called a top field macroblock and the lower macroblock is called a bottom field macroblock.

Reference buffer for storing multiple reference pictures are configured in unit of frame. In the frame picture coding, all reference pictures are considered as units of frame in which two fields are combined into one frame, and one picture among the reference frame pictures is used for motion compensation. Accordingly, values are allocated to the reference picture indexes in unit of frame.

The reference picture index for P frame is obtained by sorting all the reference frames in an order reverse to a coding order and then sequentially allocating an index, which is increased by one, to the sorted reference frames. The reference picture index for B frame is classified into list 0 and list 1 and is determined based on a display order of the reference frame.

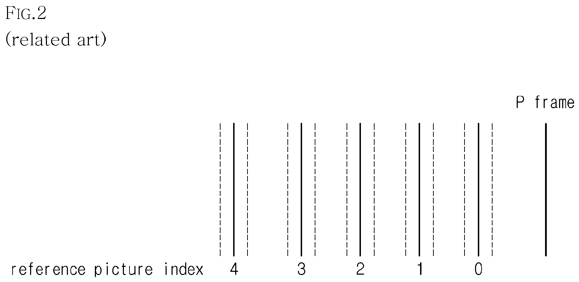

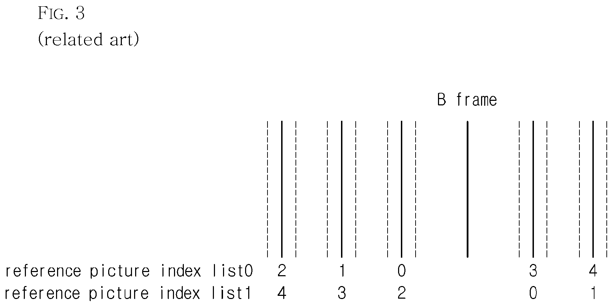

First, in case of the reference frame list 0, indexes are allocated in a reverse order to the reference frames whose display order lags behind the B frame, and then, the remaining indexes are allocated in the display order to the reference frames whose display order leads the B frame. In case of the reference frame list 1, in contrast to the reference frame list 0, indexes are allocated in the display order to the reference frames whose display order leads the B frame, and then, the remaining indexes are allocated in a reverse order to the reference frame whose display order lags behind the B frame. FIG. 2 shows a reference picture index for P frame when a size of the reference buffer is 5, and FIG. 3 shows the reference picture index lists 0 and 1 for B frame.

In the field picture coding, the fields of all reference pictures are considered as independent pictures and one of the reference field pictures is used for motion compensation. Accordingly, values are allocated to the reference picture indexes in unit of field. At this time, the reference fields are combined in the unit of frame, and then, the reference picture indexes in each field of the P frame are sorted in an order reverse to a coding order of the frame. Then, index values that are increased by one are alternately allocated in an order that starts from a reference field having parity equal to a current picture to a reference field having parity different from the current picture, while visiting the sorted reference frames in sequence.

In addition, in case of the reference picture index lists 0 and 1 for each field of B frame, all the reference fields are combined in unit of frame and then a reference frame is sorted in the same manner as a method of determining reference frame index of B frame. Thereafter, the indexes that are increased by one are alternately allocated in an order that starts from a reference field having parity equal to a current picture to a reference field having parity different from the current picture, while visiting the sorted reference frames in sequence.

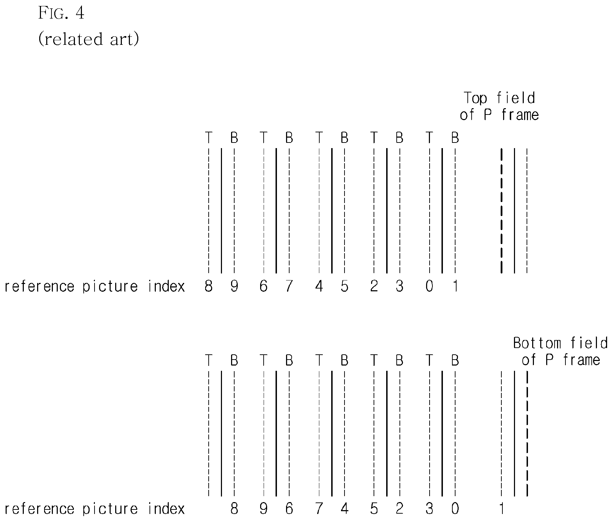

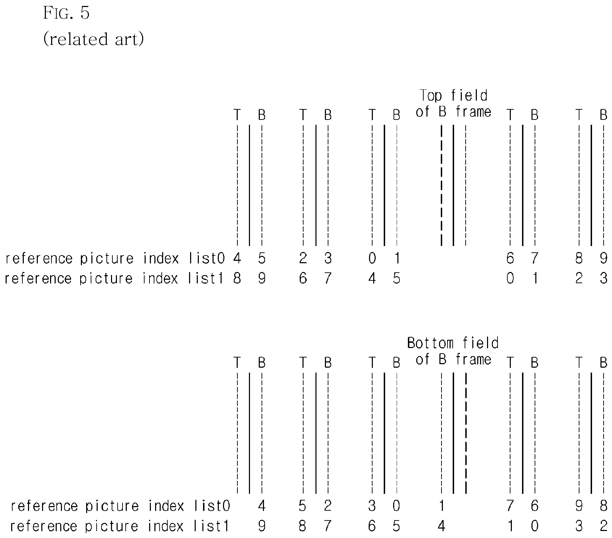

FIG. 4 shows reference picture indexes of top and bottom fields of P frame when a size of reference buffer is 5, and FIG. 5 shows reference picture index lists 0 and 1 of top and bottom fields of B frame that can be used as a reference.

Document VCEG-N76 of ITU-T Q.6 SG16 VCEG proposes to provide a field/frame block adaptive reference design as an alternative to the interlaced coding scheme presented in Document VCEG-N57 of ITU-T Q.6 SG16 VCEG. According to this proposal, the *MB_type* tool described in Document VCEG-N10 of ITU-T Q.6 SG16 VCEG sections 3.5, 3.6, 3.7 and 3.7.2 is modified in a specific way to accommodate adaptive/field frame blocking. According to this proposal, the vertical splitting of NxM modes 3, 4, 5, 6, 7 provides an opportunity to aggregate field lines of the same parity (top/bottom) into coding blocks on a per-macroblock basis. In those modes, a flag (*field_mode*) would accompany applicable NxM modes somewhere in the macroblock header. Different new semantics for the variable *Reference_frame* used in Document VCEG-N10 are proposed. A code number starting from the value "0" which is incremented by values of "1" is assigned to fields of previously decoded frames, starting with the last decoded same-parity field (1 frame back) and continuing with the last decoded opposite-parity field (1 frame back) before resuming by the same-parity field 2 frames back. A similar disclosure is found in document VCEG-O59 of ITU-T Q.6 SG16 VCEG

Proposed draft modifications to the Joint Video Specification (ITU-T Rec. H.264 | ISO/IEC 14496-10 AVC) are disclosed in Document JVT-E149r5.doc of the Joint Video Team (JVT) of ISO/IEC MPEG and ITU-T VCEG. According to this document, the decoded picture buffer contains frame stores. Each frame store may contain one field or a pair of complimentary fields. Complimentary fields have the same frame number but opposite parity. A frame store is in use when it contains at least one field. The decoder stores decoded pictures in the decoded frame buffer as indicated by the bitstream. Pictures are stored for prediction of pictures that are subsequent to the current picture in decoding order and/or because their output time is later than their decode time. A picture that is stored for prediction, referred to as a reference picture, is marked as "used for reference", and is labelled as a short term reference picture, in which case it is identified by its frame_number and parity. A short term picture may be assigned a long term reference frame index, in which case it is identified by its long term index. A picture that is not stored for prediction is labelled as "unused for prediction". Each stored picture is associated with an output time indication. Pictures are removed from the decoded frame buffer when they are marked as "unused for reference" and their output time indication is earlier than or equal to the current time. Short term reference pictures can remain marked for reference for a finite duration, given by MAX_FN. Long term reference pictures can remain marked "used for reference" until the next IDR picture. Memory_management_control_operation commands are used to modify the contents of the buffer. Reference pictures are addressed through reference indices. A reference index is an index into a list of reference pictures stored in the decoded picture buffer. When decoding a P or SP slice there is a single list (list 0) of the reference picture indices. When decoding a B slice there is a second list (list 1) in addition to list 0 that lists the reference pictures in an order that is independent of the ordering of list 0. Prediction of a block in a B slice may be based on pictures from one or both lists. At the beginning of decoding of each slice, the default index order is created using picture numbers and long-term indices. This default index order is mapped to an index order according to the remapping_of_pic_nums_idc, abs_diff_pic_num_minus1, and long_term_pic_idx fields. The decoder employs these (remapped) indices when referencing a picture for motion compensation on the macroblock layer. Consequently, each picture has both a default index and a remapped index. In the case that the current picture is field-structured, each field of the stored reference frames is identified as a separate reference picture with a unique index. Thus field structured pictures effectively have at least twice the number of pictures available for referencing.

Document JVT-D108 of the Joint Video Team (JVT) of ISO/IEC MPEG & ITU-T VCEG presents the results of MB-level adaptive frame/field coding for interlaced video materials, and the performance comparisons with picture level adaptive frame/field coding. A frame of an interlace video sequence consists of two fields, scanned at different time instants. The two fields of a frame can be coded jointly (e.g. frame-based coding) or separately (e.g. field-based coding). The decision on frame or field coding can be made at either picture level or MB level. In this document, the decision on frame/field coding is moved to MB level. A MB can now be coded in either frame or field mode. Each MB in a Super MB (consisting of 2 MBs of 16x16) has its own reference frame. When a Super MB employs field mode, one field MB may use any field of any picture in the reference frame buffer. Reference frame information (ref_frame) of Super MB in field mode determines which field is used for motion compensation. The field notation is set in favor to the same field; i.e., the lower number to the same field parity. For example, the top field MB of a Super MB with ref_frame = 0 points to the top field of the previous reference picture. Similarly, the bottom field MB of a Super MB with ref_frame = 1 points to the top field of the previous reference picture.

According to document JVT-D108, the numbers are assigned such that the lower number is assigned to the same field parity.

The "Study of Final Committee Draft of Joint Video Specification (ITU-T Rec. H.264 | ISO/IEC 14496-10 AVC) is disclosed in document JVT-F100 of the Joint Video Team (JVT) of ISO/IEC MPEG & ITU-T VCEG discloses a decoding process for inter prediction samples in an inter prediction process. According to this process, for the derivation of the reference picture, the following applies:

If field_pic_flag (field_pic_flag is part of the slice header syntax; field_pic_flag equal to 1 specifies that the slice is associated to a coded field and equal to 0 specifies that the picture is a coded frame) is equal to 1, the reference field or field of a reference frame referred by PicNum = RefPicListX[refIdxLX] or LongTermPicNum = RefPicListX[refIdxLX] shall be the output. PicNum is a variable assigned to each short-term reference picture. The reference picture list RefPicListX is an list ordered such that short-term reference fields have lower indices than long-term reference fields. LongTermPicNum is a variable assigned to each long-term reference picture. Otherwise, the following applies:

- If the current macroblock is a frame macroblock, the reference frame or complementary field pair referred by PicNum = RefPicListX[refIdxLX] or LongTermPicNum = RefPicListX[refIdxLX] shall be the output.
- Otherwise, the reference field or field of a reference frame referred by PicNum = RefPicListX[refIdxLX / 2] + 1 - (refIdxLX % 2) or LongTermPicNum = RefPicListX[refIdxLX / 2] + 1 - (refIdxLX % 2) shall be the output.

Interlace coding tools for a draft version of document VCEG-N10 of ITU-T Q.6 SG16 VCEG are disclosed in Document VCEG-O37 of ITU-T Q.6 SG16 VCEG. Adaptive frame/field coding at either a picture level or MB level is discussed. According to this document, the reference frame for a MB has to be indicated in the syntax at the MB level. TML8 (frame-based) assigns code number 0 to the most recently coded frame, 1 to the second most recently coded frame, and so on. This implies the closer the reference frame to the current frame, the more likely the reference frame will be selected, and hence the smaller the code number is assigned. For field-based coding, the reference can be either the top or the bottom field. The reference field will also be indicated in the syntax at the MB level. Similar to at both sequence and picture levels, the code number for reference fields are arranged as follows:

1. The code numbers for the field-based references stored in the reference buffer, 0, 1, 2, 3, ..., are grouped into pairs of (0,1), (2,3), (4,5), ...
2. The code number pairs are assigned to the reference frames of two fields according to their distances to the current frame.
3. For each reference frame, the field of the same parity as the current field is given the smaller number of the code number pair assigned for the frame.

Both the encoder and the decoder follow this rule.
In addition, each field MB is treated as an independent MB in the sense that it can have its own reference field for all blocks in that field MB (these two reference fields are not necessarily come from the same frame). Hence, two codes are put in the syntax at the MB level to indicate reference field of its top and bottom field when field MC is employed.

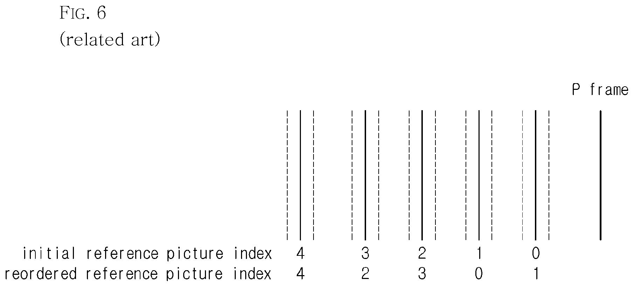

In order to improve coding efficiency, the moving picture coding system using multiple reference pictures provides a function of reordering the reference picture indexes before decoding a picture or a slice. It is arbitrarily reordering the reference picture indexes so as to enhance the coding efficiency after determining initial preference picture index for the frame and field pictures. FIG. 6 shows a result of determining initial reference picture index for P frame and arbitrarily reordering indexes according to the above-described method.

When the moving, picture coding system using the multiple reference pictures codes an interlaced moving picture into a frame picture having frame/field macroblock, all the reference pictures for the frame macroblock are considered as frame unit and one of the reference frame pictures must be used for motion compensation. In addition, fields of all the reference pictures for the field macroblock are considered as independent pictures and one of the reference field pictures must be used for motion compensation.

Accordingly, in the frame picture coding that selects the frame/field coding modes at the macroblock level, it is necessary to allocate values to the reference picture index in frame unit or field unit according to the coding mode of each macroblock.

**Disclosure of the Invention**

Accordingly, the present invention is directed to a method for coding a moving picture that substantially obviates one or more of the problems due to limitations and disadvantages of the related art.

An object of the present invention is to provide a method for coding a moving picture, which efficiently provides reference picture information used for motion compensation by determining the reference picture index differently according a coding mode of macroblock when interlaced moving picture is coded with a frame picture having frame/field macroblocks in a moving picture coding system using multiple reference pictures.

Additional features and advantages of the invention will be set forth in the description which follows, and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, there is provided a method for coding a moving picture in a moving picture coding system using multiple reference picture, a method for setting a reference index, when an interlaced moving picture is coded into a frame picture having frame/field macroblock. The method comprising: (a) determining reference picture index of frame unit at a picture (or slice) level; and (b) determining reference picture index according to a coding mode of the macroblock on the basis of the reference picture index of frame unit at a macroblock level.

According to another embodiment of the present invention, there is provided a method for coding an interlaced moving picture into a frame picture having frame/field macroblock in a moving picture coding system using multiple reference picture, wherein a reference picture index of the frame macroblock is determined at a macroblock level by determining the reference picture index of frame unit at a picture (or slice) level and the reference picture index of frame unit is used.

According to further another embodiment of the present invention, there is provided a method for coding an interlaced moving picture into a frame picture having frame/field macroblock in a moving picture coding system using multiple reference picture, wherein a reference picture index of the frame macroblock is determined at a macroblock level by determining the reference picture index of frame unit at a picture (or slice) level and respectively allocating a lower index and a higher index to a top reference field and a bottom reference field while sequentially visiting the reference frames according to an order of reference picture index of frame unit, the top and bottom field indexes being giving by an equation:

$$\text{top reference field index} = 2 \times \text{picture index of reference frame;}$$

and

$$\text{bottom reference field index} = 2 \times \text{picture index of reference frame} + 1.$$

According to further another embodiment of the present invention, there is provided a method for coding an interlaced moving picture into a frame picture having frame/field macroblock in a moving picture coding system using multiple reference picture, wherein a reference picture index of the frame macroblock is determined at a macroblock level by determining the reference picture index of frame unit at a picture (or slice) level and respectively allocating a lower index and a higher index to a bottom reference field and a top reference field while sequentially visiting the reference frames according to an order of reference picture index of frame unit, the top and bottom reference field indexes being given by an equation:

$$\text{top reference field index} = 2 \times \text{picture index of reference frame} + 1;$$

and

$$\text{bottom reference field index} = 2 \times \text{picture index of reference frame.}$$

According to further another embodiment of the present invention, there is provided a method for coding an interlaced moving picture into a frame picture having frame/field macroblock in a moving picture coding system using multiple reference picture, wherein a reference picture index of the frame macroblock is determined at a macroblock level by determining the reference picture index of frame unit at a picture (or slice) level and alternately allocating indexes, which are increased by one, to reference fields, starting from a reference field having parity equal to a current field to reference field having parity different from the current field while sequentially visiting the reference frames according to an order of reference picture index of frame unit in the field macroblock.

According to further another embodiment of the present invention, there is provided a method for coding an interlaced moving picture into a frame picture having frame/field macroblock in a moving picture coding system using multiple reference picture, wherein a reference picture index of the frame macroblock is determined at a macroblock level by determining the reference picture index of frame unit at a picture (or slice) level allocating a lower index to a reference field close to a current field in view of time and allocating higher index to a reference field far from the current field in view of time while sequentially visiting the reference frames according to an order of reference picture index of frame unit, the indexes of the reference fields being given by an equation:

```
index of the reference field close to the current field
= 2 × picture index of reference frame;
```

and

```
index of the reference field far from the current field
= 2 × picture index of reference frame + 1.
```

## Brief Description of the Drawings

The accompanying drawings, which are included to provide a further understanding of the invention and are incorporated in and constitute a part of this specification, illustrate embodiments of the invention and together with the description serve to explain the principles of the invention.

In the drawings:

FIG. 1 shows macroblock pair in frame picture having general frame/field macroblock;

FIG. 2 shows reference picture indexes of P frame coding in a moving picture coding system according to the related art;

FIG. 3 shows the reference picture index lists 0 and 1 of B frame coding in a moving picture coding system according to the related art;

FIG. 4 shows reference picture indexes in a coding of top and bottom fields of P frame in a moving picture coding system according to the related art;

FIG. 5 shows reference picture index lists 0 and 1 in a coding of top and bottom fields of B frame in a moving picture coding system according to the related art;

FIG. 6 shows reference picture indexes reordered in a coding of P frame in a moving picture coding system according to the related art;

FIG. 7 shows reference picture indexes of P frame and B frame having frame macroblock in a moving picture coding system according to the present invention;

FIG. 8 shows reference picture indexes of P frame and B frame having field macroblock in a moving picture coding system according to the present invention (case 1);

FIG. 9 shows reference picture indexes of P frame and B frame having field macroblock in a moving picture coding system according to the present invention (case 2);

FIG. 10 shows reference picture indexes of P frame having field macroblock in a moving picture coding system according to the present invention (case 3);

FIG. 11 shows reference picture indexes of B frame having field macroblock in a moving picture coding system according to the present invention (case 3); and

FIG. 12 shows reference picture indexes of P frame and B frame having field macroblock in a moving picture coding system according to the present invention (case 4).

## Best Mode for Carrying Out the Invention

Hereinafter, preferred embodiments of the present invention will be described in detail with reference to accompanying drawings.

When an interlaced moving picture is coded into frame picture having frame/field macroblock, a moving picture coding system using multiple reference pictures must performs a motion compensation from a reference frame in order for frame coding in the frame macroblock. In other words, all reference pictures must be considered as frame unit. The moving picture coding system, however, must performs a motion compensation from a reference field in order for a field coding in the field macroblock. In other words, all reference pictures must be considered as field unit.

Accordingly, the frame pictures having frame/field macroblock must use indexes having different structures at macroblock level. For example, the frame macroblock uses a reference picture index of frame unit and the field macroblock uses a reference picture index of field unit. It should be considered that the reference picture indexes can be reordered at a picture or slice level.

Therefore, the frame picture having frame/field macroblocks should consider the reference picture in frame unit at a picture or slice level and have the reordered reference picture indexes of frame unit. It is necessary to determine reference picture index according to a coding mode of macroblock based on the reference picture indexes of the frame unit at the macroblock level.

The present invention provides a method for determining reference picture index in frame picture having frame/field macroblock. The method includes a process of determining reference picture index at a picture (or slice) level and a process of determining reference picture index at a macroblock level.

[1] Determination of Reference Picture Index at Picture (or Slice) Level

All the reference pictures are considered in frame unit at a picture or slice level and reference picture indexes of frame unit are calculated.

In the method of determining a reference picture index for P frame, reference frames are sorted in an order reverse to a coding order and indexes are allocated while visiting the sorted reference frames in sequence.

Reference picture indexes for B frame are determined based on a display order of the reference frames. First, in case of a reference frame list 0, indexes are allocated in a reverse order to reference frames whose display orders are lower than the display order of the B frame and the remaining indexes are allocated in the display order to reference frames whose display order are higher than the display order of the B frame.

In case of a reference frame list 1, in contrast to the reference frame list 0, indexes are allocated in the display order to reference frames whose display orders are higher than the B frame and the remaining indexes are allocated in a reverse order to reference frames whose display orders are lower than the B frame. When the reference picture indexes are reordered so as to enhance a coding efficiency, the reference picture indexes of frame unit are reordered.

[2] Determination of Reference Picture Index at Macroblock Level

The reference picture index is modified according to the coding mode of the macroblock while performing a coding in unit of macroblock pair with respect to the reference picture indexes of frame unit, which are obtained at the picture (or slice) level. This process will be described below.

[2.1] Case of Frame Macroblock

Since motion compensation must be performed to frame macroblocks from reference frame, the reference picture index should be frame unit. Accordingly, the reference picture indexes of frame unit, which are obtained at the picture (or slice) level, are used.

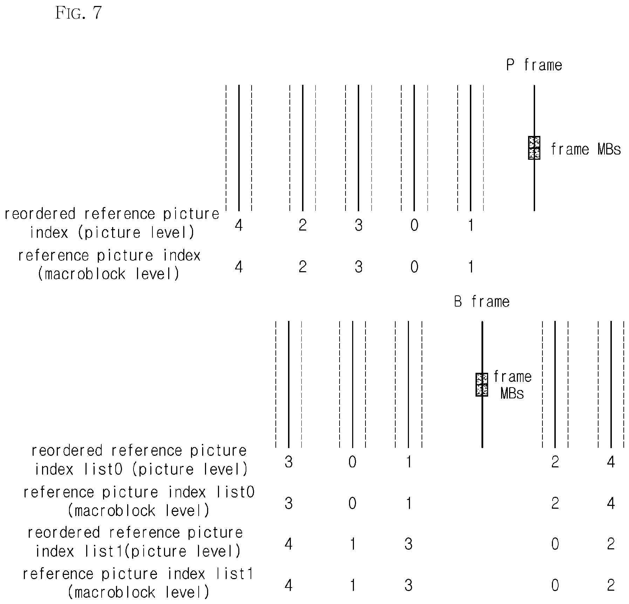

Reference frame stored in a reference buffer should be configured with field pair having parities opposite to each other. FIG. 7 shows reference picture indexes for frame macroblock in P frame and B frame when a size of the reference buffer is 5.

[2.2] Case of Field Macroblock

Since motion compensation must be performed to field macroblocks from reference field, the reference picture index should be field unit. In this case, field pair having parities opposite to each other is also present in the reference buffer. Accordingly, each reference frame is divided into two fields while sequentially visiting the reference frame according to the reference picture indexes of frame unit, which are obtained at the picture (or slice) level. Then, the reference picture indexes are newly allocated to each field. The reference picture indexes for two fields of each reference frame are allocated in various methods (Cases 1 to 4).

(Case 1)

Regardless of the top and bottom field macroblocks of a current field macroblock, a lower index is allocated to the top reference field and a higher index is allocated to the bottom reference field while sequentially visiting the reference frames in an order of the reference picture indexes, which are obtained at the picture (or slice) level.

In other words, the top and bottom reference field indexes can be given by an equation below.

```
Top reference field index = 2 × picture index of
reference frame
```

```
Bottom reference field index = 2 × picture index of
reference frame + 1
```

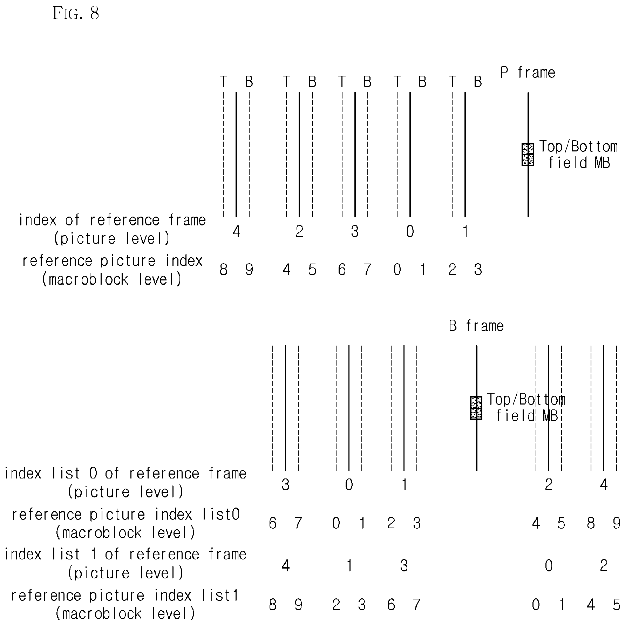

FIG. 8 shows reference picture indexes for field macroblocks of P frame and B frame.

(Case 2)

Regardless of the top and bottom field macroblocks of a current field macroblock, a lower index is allocated to the bottom reference field and a higher index is allocated to the top reference field while sequentially visiting the reference frames in an order of the reference picture indexes, which are obtained at the picture (or slice) level.

In other words, the top and bottom reference field indexes can be given by an equation below.

```
Top reference field index = 2 × picture index of
reference frame + 1
```

```
Bottom reference field index = 2 × picture index of
reference frame
```

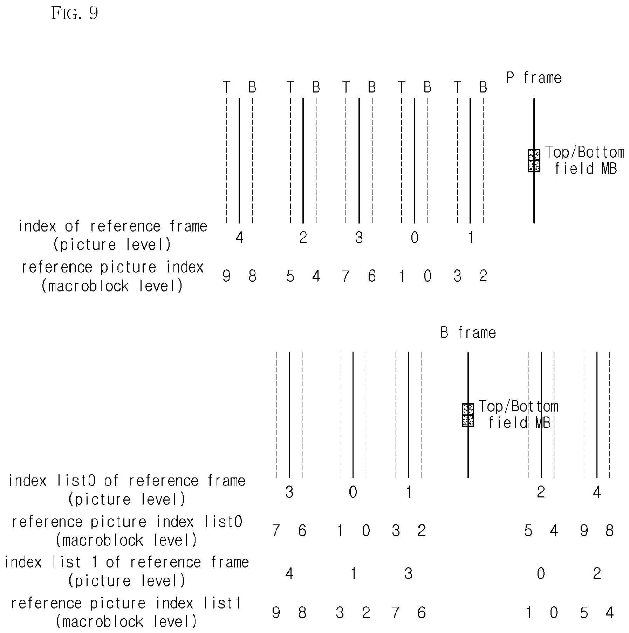

FIG. 9 shows reference picture indexes for field macroblocks of P frame and B frame.

(Case 3)

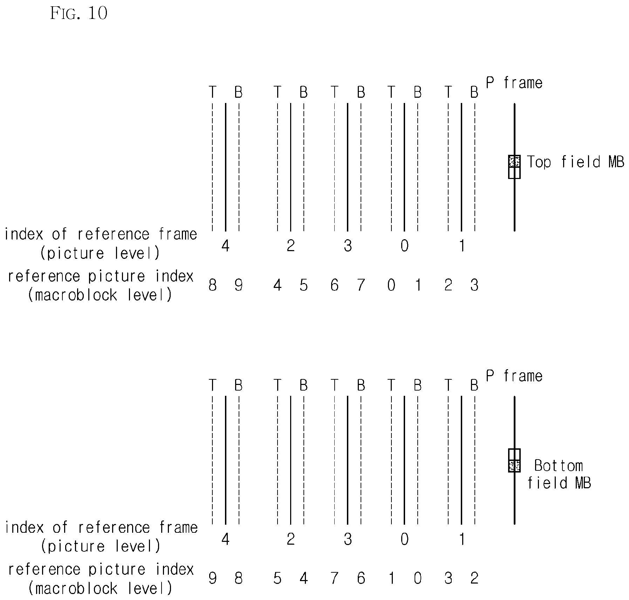

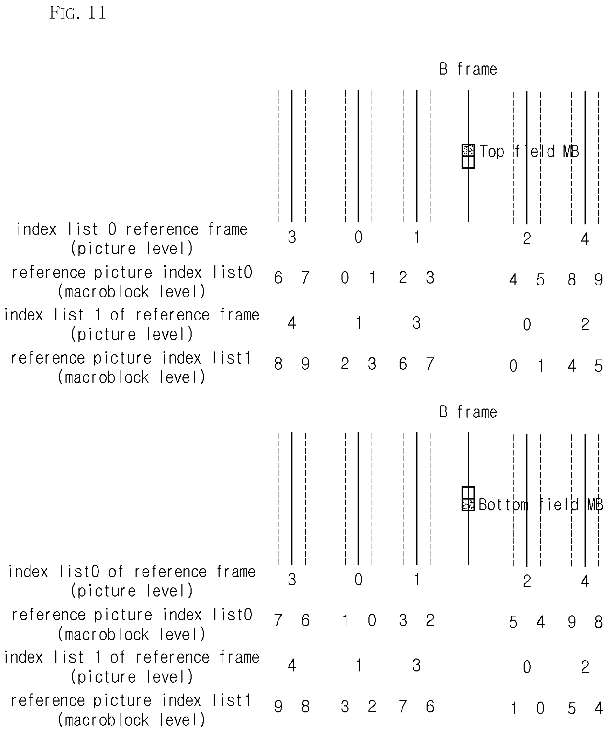

Indexes that are increased by one are alternately allocated to reference fields, starting from the reference field having a parity equal to the current field to the reference field having a parity different from the current field, while sequentially visiting the reference frames according to a reference picture index order of the picture (or slice) level. FIGs. 10 and 11 show reference picture indexes for the field macroblocks of P frame and B frame.

(Case 4)

Regardless of the top and bottom field macroblocks of a current field macroblock, a lower index is allocated to reference field close to the current field in view of time and a higher index is allocated to reference field far from the current field in view of time while sequentially visiting the reference frames in an order of the reference picture indexes of the picture (or slice) level.

In other words, the reference field indexes can be given by an equation below.

```
Reference field index close to the current field = 2 ×
picture index of reference frame
```

```
Reference field index far from the current field = 2 ×
picture index of reference frame + 1
```

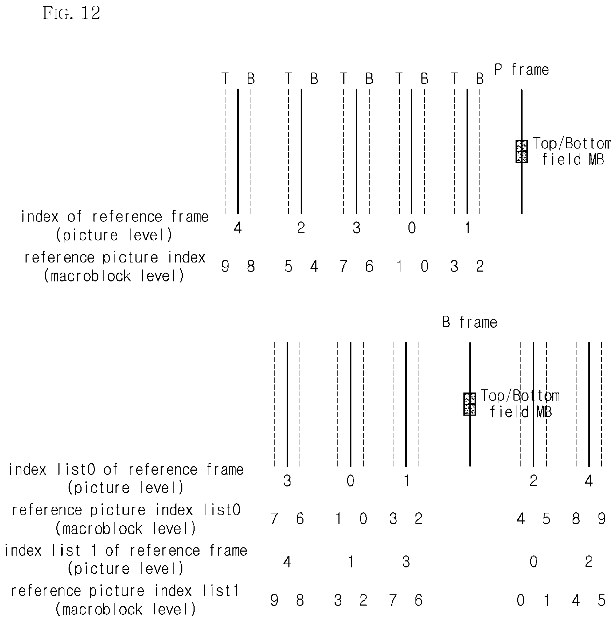

In FIG. 12, there are shown reference picture indexes for field macroblock of P frame and B frame.

While the present invention has been described and illustrated herein with reference to the preferred embodiments thereof, it will be apparent to those skilled in the art that various modifications and variations can be made therein without departing from the scope of the invention. Thus, it is intended that the present invention covers the modifications and variations of this invention that come within the scope of the appended claims and their equivalents.

The subject matter of the following paragraphs that are numbered for allowing references is part of the disclosure of the present document and may be claimed in the present patent application or a divisional application derived there from.

[1] In a moving picture coding system using multiple reference picture, a method for setting a reference index when an interlaced moving picture is coded into a frame picture having frame/field macroblock, comprising: (a) determining reference picture index of frame unit at a picture (or slice) level; and (b) determining reference picture index according to a coding mode of the macroblock on the basis of the reference picture index of frame unit at a macroblock level.

[2] The method according to paragraph [1], wherein in the step (a), all reference pictures are considered in unit of frame.

[3] The method according to paragraph [1], wherein in the step (a), reference picture index for P frame is determined by sorting the reference frames in an order reverse to a coding order and allocating index values to the sorted reference frames while sequentially visiting the sorted reference frames.

[4] The method according to paragraph [1], wherein in the step (a), reference picture index for B frame is determined based on a display order of the reference frame.

[5] The method according to paragraph [1], wherein in the step (a), in case of a reference frame list 0 for B frame, indexes are allocated in a reverse order to reference frames whose display orders are lower than the B frame and the remaining indexes are allocated in a display order to reference frames whose display orders are higher than the B frame; and in case of a reference frame list 1 for B frame, indexes are allocated in the display order to reference frames whose display orders are higher than the B frame and the remaining indexes are allocated in the reverse order to reference frames whose display orders are lower than the B frame.

[6] The method according to paragraph [1], wherein in the step (b), the reference picture index is determined according to the coding mode of the macroblock while coding macroblock pair with respect to the reference picture index of frame unit.

[7] The method according to paragraph [1], wherein in the step (b), the frame macroblocks use the reference picture indexes of frame unit.

[8] The method according to paragraph [1], wherein in the step (b), the reference frame stored in a reference buffer is configured with field pair having parities opposite to each other.

[9] The method according to paragraph [1], wherein in the step (b), regardless of top and bottom field macroblocks of a current field macroblock, a lower index is allocated to the top reference field and a higher index is allocated to the bottom reference field while sequentially visiting the reference frames in an order of the reference picture indexes, the top and bottom reference field indexes being given by an equation: top reference field index = $2 \times$ picture index of reference frame; and bottom reference field index = $2 \times$ picture index of reference frame + 1.

[10] The method according to paragraph [1], wherein in the step (b), regardless of top and bottom field macroblocks of a current field macroblock, a lower index is allocated to the bottom reference field and a higher index is allocated to the top reference field while sequentially visiting the reference frames in an order of the reference picture indexes, the top and bottom reference field indexes being given by an equation: top reference field index = $2 \times$ picture index of reference frame + 1; and bottom reference field index = $2 \times$ picture index of reference frame

[11] The method according to paragraph [1], wherein in the step (b), indexes that are increased by one are alternately allocated to reference fields, starting from the reference field having a parity equal to the current field to the reference field having a parity different from the current field, while sequentially visiting the reference frames according to a reference picture index order of the picture (or slice) level.

[12] The method according to paragraph [1], wherein in the step (b), regardless of the top and bottom field macroblocks of a current field macroblock, a lower index is allocated to reference field close to the current field in view of time and a higher index is allocated to reference field far from the current field in view of time while sequentially visiting the reference frames in an order of the reference picture indexes, the reference field indexes being given by an equation: reference field index close to the current field = $2 \times$ picture index of reference frame; and reference field index far from the current field = $2 \times$ picture index of reference frame + 1.

[13] In a moving picture coding system using multiple reference picture, a method for coding an interlaced moving picture into a frame picture having frame/field macroblock, wherein a reference picture index of the frame macroblock is determined at a macroblock level by determining the reference picture index of frame unit at a picture (or slice) level and the reference picture index of frame unit is used.

[14] In a moving picture coding system using multiple reference picture, a method for coding an interlaced moving picture into a frame picture having frame/field macroblock, wherein a reference picture index of the frame macroblock is determined at a macroblock level by determining the reference picture index of frame unit at a picture (or slice) level and respectively allocating a lower index and a higher index to a top reference field and a bottom reference field while sequentially visiting the reference frames according to an order of reference picture index of frame unit, the top and bottom field indexes being giving by an equation: top reference field index = 2 × picture index of reference frame; and bottom reference field index = 2 × picture index of reference frame + 1.

[15] In a moving picture coding system using multiple reference picture, a method for coding an interlaced moving picture into a frame picture having frame/field macroblock, wherein a reference picture index of the frame macroblock is determined at a macroblock level by determining the reference picture index of frame unit at a picture (or slice) level and respectively allocating a lower index and a higher index to a bottom reference field and a top reference field while sequentially visiting the reference frames according to an order of reference picture index of frame unit, the top and bottom reference field indexes being given by an equation: top reference field index = 2 × picture index of reference frame + 1; and bottom reference field index = 2 × picture index of reference frame.

[16] In a moving picture coding system using multiple reference picture, a method for coding an interlaced moving picture into a frame picture having frame/field macroblock, wherein a reference picture index of the frame macroblock is determined at a macroblock level by determining the reference picture index of frame unit at a picture (or slice) level and alternately allocating indexes, which are increased by one, to reference fields, starting from a reference field having parity equal to a current field to reference field having parity different from the current field while sequentially visiting the reference frames according to an order of reference picture index of frame unit in the field macroblock.

[17] In a moving picture coding system using multiple reference picture, a method for coding an interlaced moving picture into a frame picture having frame/field macroblock, wherein a reference picture index of the frame macroblock is determined at a macroblock level by determining the reference picture index of frame unit at a picture (or slice) level allocating a lower index to a reference field close to a current field in view of time and allocating higher index to a reference field far from the current field in view of time while sequentially visiting the reference frames according to an order of reference picture index of frame unit, the indexes of the reference fields being given by an equation: index of the reference field close to the current field = 2 × picture index of reference frame; and index of the reference field far from the current field = 2 × picture index of reference frame + 1.

## Industrial Applicability

According to a coding a moving picture method of the present invention, when a moving picture coding system using multiple reference pictures codes an interlaced moving picture into a frame picture having frame/field macroblock, the moving picture coding system efficiently provides reference picture information used for motion compensation by differently determining reference picture index according to coding modes of macroblocks.

## Claims

1.  A method of coding a current field macroblock in a B-frame, comprising:

    obtaining a reference frame picture list including multiple reference frame pictures;
    determining a reference frame picture index of the multiple reference frame pictures in the reference frame picture list based on display order information for the multiple reference frame pictures, reference frame picture index numbers being allocated in a display order to reference frame pictures whose display order is higher than a display order of a current frame picture and remaining reference frame picture index numbers being allocated in a reverse order to reference frame pictures whose display order is lower than the display order of the current frame picture, wherein the current frame picture includes the current field macroblock;
    reordering the reference frame picture index allocated to each reference frame picture in the reference frame picture list;
    obtaining motion vector information for the current field macroblock;
    **characterized by**
    obtaining a reference field picture index associated with the current frame picture including the current field macroblock by alternately allocating reference field picture indexes that are increased by one to reference field pictures, starting from a first reference field picture having a parity equal to a parity of the current field macroblock to a second reference field picture having a parity different from the parity of the current field macroblock, while starting from a reference field picture index value of "0" and a reference frame picture having a reference frame picture index value of "0" and sequentially visiting the multiple reference frame pictures according to the order of the reordered reference frame picture index, such that the reference field picture index is related to the reordered reference frame picture index according to following equations:

        - reference field picture index = reordered reference frame picture index *2 when a field having a same parity as the current field macroblock; and
- reference field picture index = reordered reference frame picture index *2 + 1 when a field having a different parity as the current field macroblock; and performing motion compensation the current field macroblock in the B frame by using a reference field picture indicated by the reference field picture index and the motion vector information for the current field macroblock.

**Patentansprüche**

1. Verfahren zum Codieren eines aktuellen Field-Makroblocks in einem B-Frame, aufweisend:

Erhalten einer Referenz-Framebild-Liste mit mehreren Referenz-Framebildern;
Bestimmen eines Referenz-Framebild-Index der mehreren Referenz-Framebilder in der Referenz-Framebild-Liste auf der Grundlage von Anzeigereihenfolge-Informationen für die mehreren Referenz-Framebilder, wobei Referenz-Framebild-Indexnummern in Anzeigereihenfolge den Referenz-Framebildern zugeordnet werden, deren Anzeigereihenfolge größer ist als eine Anzeigereihenfolge des aktuellen Framebilds und wobei die verbleibenden Referenz-Framebild-Indexnummern in umgekehrter Reihenfolge den Referenz-Framebildern zugeordnet werden, deren Anzeigereihenfolge kleiner ist als die Anzeigereihenfolge des aktuellen Framebilds, wobei das aktuelle Framebild den aktuellen Field-Makroblock beinhaltet;
Umordnen des Referenz-Framebild-Index, der jedem Referenz-Framebild in der Referenz-Framebild-Liste zugeordnet ist;
Erhalten von Bewegungsvektorinformationen für den aktuellen Field-Makroblock;
**gekennzeichnet durch**
Erhalten eines Referenz-Fieldbild-Index, der dem aktuellen Framebild zugeordnet ist, welches den aktuellen Field-Makroblock enthält, durch abwechselndes Zuordnen der jeweils um Eins erhöhten Referenz-Fieldbild-Indices zu Referenz-Fieldbildern, anfangend bei einem ersten Referenz-Fieldbild mit einer Parität, die einer Parität des aktuellen Field-Makroblocks entspricht, hin zu einem zweiten Referenz-Fieldbild mit einer Parität, die sich von der Parität des aktuellen Field-Makroblocks unterscheidet, wobei mit einem Referenz-Fieldbild-Indexwert von "0" und einem Referenz-Framebild mit einem Referenz-Framebild-Indexwert von "0" begonnen wird und die mehreren Referenz-Framebilder gemäß der Reihenfolge des umgeordneten Referenz-Framebild-Index sequentiell durchlaufen werden, sodass der Referenz-Fieldbild-Index entsprechend der folgenden Gleichungen mit dem umgeordneten Referenz-Framebild-Index in Verbindung stehen:

- Referenz-Fieldbild-Index = umgeordneter Referenz-Framebild-Index *2, wenn ein Field die gleiche Parität hat wie der aktuelle Field-Makroblock; und
- Referenz-Fieldbild-Index = umgeordneter Referenz-Framebild-Index *2 + 1,
wenn ein Field eine andere Parität hat als der aktuelle Field-Makroblock; und Durchführen von Bewegungskompensierung für den aktuellen Field-Makroblock im B-Frame unter Verwendung eines durch den Referenz-Fieldbild-Index angegebenen Referenz-Fieldbildes und der Bewegungsvektorinformationen für den aktuellen Field-Makroblock.

**Revendications**

1. Procédé de codage d'un macrobloc de champ courant dans une trame B, comportant :

l'obtention d'une liste d'images de trame de référence comprenant de multiples images de trame de référence ;
la détermination d'un indice d'image de trame de référence des multiples images de trame de référence dans la liste d'images de trame de référence sur la base d'informations d'ordre d'affichage pour les multiples images de trame de référence, des numéros d'indice d'image de trame de référence étant attribués dans un ordre d'affichage aux images de trame de référence dont l'ordre d'affichage est plus élevé qu'un ordre d'affichage d'une image de trame courante et des numéros d'indice d'image de trame de référence restants étant attribués dans un ordre inverse à des images de trame de référence dont l'ordre d'affichage est plus bas que l'ordre d'affichage de l'image de trame courante, dans lequel l'image de trame courante comprend le macrobloc de champ courant ;
la réorganisation de l'indice d'image de trame de référence attribué à chaque image de trame de référence dans la liste d'images de trame de référence ;
l'obtention d'informations de vecteur de mouvement pour le macrobloc de champ courant ;

**caractérisé par**

l'obtention d'un indice d'image de champ de référence associé à l'image de trame courante comprenant le macrobloc de champ courant par attribution en alternance d'indices d'image de champ de référence, qui sont augmentés d'une unité, aux images de champ de référence, en démarrant d'une première image de champ de référence ayant une parité égale à une parité du macrobloc de champ courant vers une seconde image de champ de référence ayant une parité différente de la parité du macrobloc de champ courant, tout en démarrant d'une valeur d'indice d'image de champ de référence de « 0 » et d'une image de trame de référence ayant une valeur d'indice d'image de trame de référence de « 0 » et par la visite séquentielle des multiples images de trame de référence selon l'ordre de l'indice d'image de trame de référence réorganisé de sorte que l'indice d'image de champ de référence est relié à l'indice d'image de trame de référence réorganisé selon les équations suivantes :

- indice d'image de champ de référence = indice d'image de trame de référence réorganisé * 2 lorsqu'un champ ayant une même parité que le macrobloc de champ courant ; et
- indice d'image de champ de référence = indice d'image de trame de référence réorganisé * 2 + 1 lorsqu'un champ ayant une parité différente par rapport au macrobloc de champ courant ; et

la réalisation d'une compensation de mouvement pour le macrobloc de champ courant dans la trame B à l'aide d'une image de champ de référence indiquée par l'indice d'image de champ de référence et des informations de vecteur de mouvement pour le macrobloc de champ courant.

Fig.1
(related art)

| 0 | 2 | 4 | 6 |
|---|---|---|---|
| 1 | 3 | 5 | 7 |
| 8 | 10 | 12 | 14 |
| 9 | 11 | 13 | 15 |

FIG.2
(related art)

P frame

reference picture index    4    3    2    1    0

Fɪɢ. 3
(related art)

B frame

reference picture index list0    2        1        0                3        4
reference picture index list1    4        3        2                0        1

FIG. 4
(related art)

Top field
of P frame

T  B  T  B  T  B  T  B  T  B

reference picture index  8  9  6  7  4  5  2  3  0  1

Bottom field
of P frame

T  B  T  B  T  B  T  B  T  B

reference picture index  8  9  6  7  4  5  2  3  0     1

FIG. 5
(related art)

Top field
of B frame

reference picture index list0 4 5 2 3 0 1 6 7 8 9
reference picture index list1 8 9 6 7 4 5 0 1 2 3

Bottom field
of B frame

reference picture index list0 4 5 2 3 0 1 7 6 9 8
reference picture index list1 9 8 7 6 5 4 1 0 3 2

Fig. 6
(related art)

```
                                                                P frame

initial reference picture index   4        3        2        1        0
reordered reference picture index  4        2        3        0        1
```

FIG. 7

P frame

frame MBs

reordered reference picture
index (picture level)        4      2      3      0      1

reference picture index
(macroblock level)           4      2      3      0      1

B frame

frame
MBs

reordered reference picture
index list0 (picture level)   3      0      1             2      4

reference picture index list0
(macroblock level)            3      0      1             2      4

reordered reference picture
index list1(picture level)    4      1      3             0      2

reference picture index list1
(macroblock level)            4      1      3             0      2

Fɪɢ. 8

P frame

| T | B | T | B | T | B | T | B | T | B |

Top/Bottom
field MB

index of reference frame
(picture level)

4    2    3    0    1

reference picture index
(macroblock level)

8  9  4  5  6  7  0  1  2  3

B frame

Top/Bottom
field MB

index list 0 of reference frame
(picture level)

3    0    1         2    4

reference picture index list0
(macroblock level)

6  7  0  1  2  3      4  5  8  9

index list 1 of reference frame
(picture level)

4    1    3         0    2

reference picture index list1
(macroblock level)

8  9  2  3  6  7      0  1  4  5

FIG. 9

P frame

T B T B T B T B T B

Top/Bottom
field MB

index of reference frame
(picture level)

4 2 3 0 1

reference picture index
(macroblock level)

9 8 5 4 7 6 1 0 3 2

B frame

Top/Bottom
field MB

index list0 of reference frame
(picture level)

3 0 1 2 4

reference picture index list0
(macroblock level)

7 6 1 0 3 2 5 4 9 8

index list 1 of reference frame
(picture level)

4 1 3 0 2

reference picture index list1
(macroblock level)

9 8 3 2 7 6 1 0 5 4

FIG. 10

P frame

T B T B T B T B T B

Top field MB

index of reference frame
(picture level)

    4     2     3     0     1

reference picture index
(macroblock level)

8 9  4 5  6 7  0 1  2 3

P frame

T B T B T B T B T B

Bottom
field MB

index of reference frame
(picture level)

    4     2     3     0     1

reference picture index
(macroblock level)

9 8  5 4  7 6  1 0  3 2

FIG. 11

B frame

Top field MB

| index list 0 reference frame (picture level) | 3 | | 0 | | 1 | | | 2 | | 4 | |
| reference picture index list0 (macroblock level) | 6 | 7 | 0 | 1 | 2 | 3 | | 4 | 5 | 8 | 9 |
| index list 1 of reference frame (picture level) | 4 | | 1 | | 3 | | | 0 | | 2 | |
| reference picture index list1 (macroblock level) | 8 | 9 | 2 | 3 | 6 | 7 | | 0 | 1 | 4 | 5 |

B frame

Bottom field MB

| index list0 of reference frame (picture level) | 3 | | 0 | | 1 | | | 2 | | 4 | |
| reference picture index list0 (macroblock level) | 7 | 6 | 1 | 0 | 3 | 2 | | 5 | 4 | 9 | 8 |
| index list 1 of reference frame (picture level) | 4 | | 1 | | 3 | | | 0 | | 2 | |
| reference picture index list1 (macroblock level) | 9 | 8 | 3 | 2 | 7 | 6 | | 1 | 0 | 5 | 4 |

FIG. 12

P frame

| T | B | T | B | T | B | T | B | T | B | |

Top/Bottom
field MB

index of reference frame
(picture level)                    4        2        3        0        1

reference picture index
(macroblock level)              9  8     5  4     7  6     1  0     3  2

B frame

Top/Bottom
field MB

index list0 of reference frame
(picture level)                    3        0        1                 2        4

reference picture index list0
(macroblock level)              7  6     1  0     3  2              4  5     8  9

index list 1 of reference frame
(picture level)                    4        1        3                 0        2

reference picture index list1
(macroblock level)              9  8     3  2     7  6              0  1     4  5